(19) 

Europäisches
Patentamt

European
Patent Office

Office européen
des brevets

(11) **EP 4 221 069 A1**

(12) **EUROPEAN PATENT APPLICATION**

(43) Date of publication:
**02.08.2023 Bulletin 2023/31**

(21) Application number: **23153683.0**

(22) Date of filing: **27.01.2023**

(51) International Patent Classification (IPC):
**H04L 9/00** (2022.01)     **H04L 9/30** (2006.01)

(52) Cooperative Patent Classification (CPC):
**H04L 9/008; H04L 9/3026; H04L 9/3093**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.01.2022 KR 20220013693**
**04.05.2022 KR 20220055268**

(71) Applicant: **Samsung Electronics Co., Ltd.**
**Gyeonggi-do 16677 (KR)**

(72) Inventors:
• **Lee, Yongwoo**
**Suwon-si, Gyeonggi-do (KR)**

• **Kim, Andrey**
**Suwon-si, Gyeonggi-do (KR)**
• **Choi, Rakyong**
**Suwon-si, Gyeonggi-do (KR)**
• **Deriabin, Maksim**
**Suwon-si, Gyeonggi-do (KR)**
• **Eom, Jieun**
**Suwon-si, Gyeonggi-do (KR)**
• **Yoo, Dong-Hoon**
**Suwon-si, Gyeonggi-do (KR)**

(74) Representative: **Grünecker Patent- und
Rechtsanwälte
PartG mbB
Leopoldstraße 4
80802 München (DE)**

(54) **APPARATUS AND METHOD WITH HOMOMORPHIC ENCRYPTION USING AUTOMORPHISM**

(57) Disclosed are an apparatus and method with homomorphic encryption using automorphism. A computing apparatus includes one or more processors and a memory storing instructions configured to cause the one or more processors to, for a blind rotation key for performing a blind rotation operation and an operand ciphertext of the blind rotation operation: generate a preprocessed ciphertext by performing preprocessing on the operand ciphertext based on automorphism, and generate an operation result of the homomorphic encryption by performing the blind rotation operation for the operand ciphertext on a vector component of the preprocessed ciphertext and a vector component of the blind rotation key.

FIG. 1

**EP 4 221 069 A1**

**Description**

BACKGROUND

1. Field

The following description relates to an apparatus and method with homomorphic encryption using automorphism.

2. Description of Related Art

Homomorphic encryption enables arbitrary operations on encrypted data. Utilizing homomorphic encryption enables arbitrary operations on encrypted data without decrypting the encrypted data, and while allowing decryption of the original encrypted data. Homomorphic encryption is lattice-based and thus resistant to quantum cryptologic algorithms.

A blind rotation operation technology can be used to apply arbitrary function operations to ciphertext messages in homomorphic encryption schemes and provides high accuracy for operation results. However, blind rotation has a disadvantage of a significantly large size of a public key.

Although there are various blind rotation operation technologies, they all require significant amounts of memory, and computational requirements significantly increase with the size of a public key necessary for the homomorphic encryption operations is increased.

Accordingly, it may be beneficial to reduce the size of public keys used in homomorphic encryption schemes.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is defined by the independent claims. Preferred embodiments are specified in the dependent claims.

In one general aspect, a computing apparatus includes one or more processors and a memory storing instructions configured to cause the one or more processors to, for a blind rotation key for performing a blind rotation operation and an operand ciphertext of the blind rotation operation: generate a preprocessed ciphertext by performing preprocessing on the operand ciphertext based on automorphism, and generate an operation result of the homomorphic encryption by performing the blind rotation operation for the operand ciphertext on a vector component of the preprocessed ciphertext and a vector component the blind rotation key.

The operand ciphertext may include a learning with error (LWE) ciphertext, and the blind rotation key may include a ring Gentry, Sahai, Waters (RGSW) ciphertext or ring learning with error (RLWE) ciphertext.

The blind rotation key may be generated based on a secret key corresponding to the operand ciphertext and a secret key corresponding to an RLWE ciphertext.

A form of the blind rotation key may be determined by comparing a range of a vector component of the operand ciphertext with a degree of an RLWE ciphertext.

The one or more processors may perform the preprocessing based on the vector component of the blind rotation key, a range of a vector component of the operand ciphertext, and a degree of an RLWE ciphertext.

The one or more processors may perform the preprocessing by determining whether a value obtained by multiplying a value, which is obtained by dividing the degree by the range, by the vector component of the blind rotation key is an even number.

The processor may generate a modified vector by modifying the vector component of the blind rotation key based on a result of determining whether the value obtained by the multiplying is the even number.

The processor may perform the blind rotation operation by performing an increment operation, an automorphism operation, and a key switching operation based on the preprocessed ciphertext.

The one or more processors may determine a form of a secret key used in an increment operation based on the vector component of the blind rotation key, a range of a vector component of the operand ciphertext, and a degree of an RLWE ciphertext, and modify a vector component used in the increment operation based on the vector component of the blind rotation key, the range of the vector component of the operand ciphertext, and the degree of the RLWE ciphertext.

The one or more processors may perform an automorphism operation based on a component of a modified vector generated by modifying a vector component of the blind rotation key based on a result of determining whether the value obtained by the multiplying is an even number, and a reciprocal of the component of the modified vector, and perform key switching based on a result of the automorphism operation.

In another general aspect, an operation method of homomorphic encryption is performed by a computing device including storage hardware and processing hardware, and the operation method includes receiving a blind rotation key for performing a blind rotation operation and an operand ciphertext of the blind rotation operation and storing the blind rotation key in the storage hardware, generating, by the processing hardware, a preprocessed ciphertext by performing preprocessing on the operand ciphertext based on automorphism, and generating, by the processing hardware, an operation result of the homomorphic encryption by performing the blind rotation operation for the operand ciphertext on a vector component of the preprocessed ciphertext based on the blind rotation key.

The operand ciphertext may include an LWE ciphertext, and the blind rotation key may include an RGSW ciphertext or RLWE ciphertext.

The blind rotation key may be generated based on a secret key corresponding to the operand ciphertext and a secret key corresponding to an RLWE ciphertext.

A form of the blind rotation key may be determined by comparing a range of a vector component of the operand ciphertext with a degree of an RLWE ciphertext.

The generating of the preprocessed ciphertext may include performing the preprocessing based on a vector component of the blind rotation key, a range of a vector component of the operand ciphertext, and a degree of an RLWE ciphertext.

The performing of the preprocessing may include performing the preprocessing by determining whether a value obtained by multiplying a value, which is obtained by dividing the degree by the range, by the vector component of the blind rotation key is an even number.

The performing of the preprocessing by determining whether the value obtained by the multiplying is the even number may include generating a modified vector by modifying the vector component of the blind rotation key based on a result of determining whether the value obtained by the multiplying is the even number.

The generating of the operation result may include performing, by the processing hardware, the blind rotation operation by performing an increment operation, an automorphism operation, and a key switching operation based on the preprocessed ciphertext.

The generating of the operation result may include determining, by the processing hardware, a form of a secret key used in an increment operation based on a vector component of the blind rotation key, a range of a vector component of the operand ciphertext, and a degree of an RLWE ciphertext, and modifying a vector component used in the increment operation based on the vector component of the blind rotation key, the range of the vector component of the operand ciphertext, and the degree of the RLWE ciphertext.

The generating of the operation result may include performing, by the processing hardware, an automorphism operation based on a component of a modified vector generated by modifying a vector component of the blind rotation key based on a result of determining whether the value obtained by the multiplying is an even number, and a reciprocal of the component of the modified vector, and performing, by the processing hardware, key switching based on a result of the automorphism operation.

Other features and aspects will be apparent from the following detailed description, the drawings, and the claims.

BRIEF DESCRIPTION OF THE DRAWINGS

FIG. 1 illustrates an example of a homomorphic encryption operation apparatus, according to one or more embodiments.

FIG. 2 illustrates an example of an operation of the homomorphic encryption operation apparatus illustrated in FIG. 1, according to one or more embodiments.

FIG. 3 illustrates an example of a key generation operation, according to one or more embodiments.

FIG. 4 illustrates an example of a preprocessing operation, according to one or more embodiments.

FIG. 5 illustrates an example of an input ciphertext and a blind rotation key, according to one or more embodiments.

FIG. 6 illustrates an example of a blind rotation operation, according to one or more embodiments.

FIG. 7 illustrates another example of a preprocessing operation, according to one or more embodiments.

FIG. 8 illustrates another example of an input ciphertext and a blind rotation key, according to one or more embodiments.

FIG. 9 illustrates another example of a flowchart of a blind rotation operation, according to one or more embodiments.

FIG. 10 illustrates still another example of a flowchart of a preprocessing operation, according to one or more embodiments.

FIG. 11 illustrates still another example of an input ciphertext and a blind rotation key, according to one or more embodiments.

FIG. 12 illustrates still another example of a blind rotation operation, according to one or more embodiments.

FIG. 13A illustrates an example of a ciphertext and a blind rotation key, according to one or more embodiments.

FIG. 13B illustrates another example of a ciphertext and a blind rotation key, according to one or more embodiments.

FIG. 14 illustrates an example of an algorithm of a blind rotation operation, according to one or more embodiments.

FIG. 15 illustrates another example of an algorithm of a blind rotation operation, according to one or more embodiments.

FIG. 16 illustrates an example of an operation of the homomorphic encryption operation apparatus illustrated in FIG. 1, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

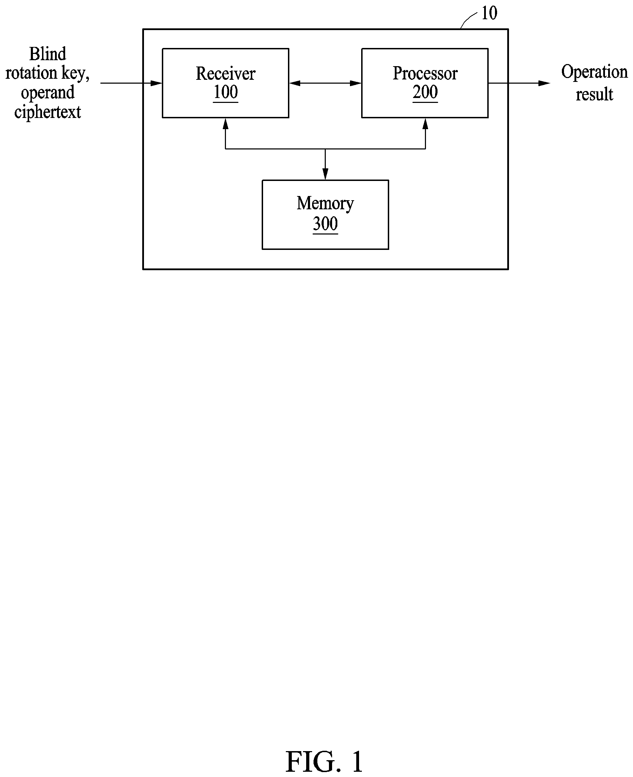

FIG. 1 illustrates an example of a homomorphic encryption operation apparatus, according to one or more embodiments.

Referring to FIG. 1, a homomorphic encryption operation apparatus 10 may perform encryption and decryption using homomorphic encryption. The homomorphic encryption operation apparatus 10 may perform a blind rotation operation for a homomorphic encryption operation.

The homomorphic encryption operation apparatus 10 may generate an operation result by performing the homomorphic encryption operation. The homomorphic encryption operation apparatus 10 may generate a blind rotation key for performing the blind rotation operation. The homomorphic encryption operation apparatus 10 may perform the blind rotation operation using the blind rotation key.

Homomorphic encryption is a type of encryption that allows various operations to be performed on encrypted data. In homomorphic encryption, a result of an operation using ciphertexts may become a new ciphertext, and a plaintext obtained by decrypting the ciphertext may be the same result as if the operation had been performed on the original unencrypted data.

Hereinafter, encrypted data or encrypted text is referred to as a ciphertext. The ciphertext may be in the form of a polynomial or a vector including (or representing) a polynomial.

The homomorphic encryption operation apparatus 10 may perform a ring learning with errors (RLWE) problem-based homomorphic encryption operation that supports an operation on a ciphertext into which a plaintext (e.g., encoded as a binary number) is encrypted. The homomorphic encryption operation apparatus 10 may perform an RLWE problem-based homomorphic encryption operation that supports an operation on a ciphertext into which a plaintext (e.g., encoded as an integer) is encrypted. The homomorphic encryption operation apparatus 10 may perform an RLWE problem-based approximate homomorphic encryption operation that supports an operation on a ciphertext into which a plaintext (e.g., encoded as a real number and/or a complex number) is encrypted.

The homomorphic encryption operation apparatus 10 may derive the same result that would be obtained from an operation performed on a plaintext by decrypting a result of performing the same operation on the plaintext in an encrypted state, using homomorphic encryption.

The homomorphic encryption operation apparatus 10 may perform an operation on a ciphertext and may perform a blind rotation operation (e.g., a lookup table (LUT) operation) and key generation. The homomorphic encryption operation apparatus 10 may perform an operation on a non-polynomial function using the blind rotation method in a homomorphic encryption scheme.

The homomorphic encryption operation apparatus 10 may perform an encryption process of encrypting input data in privacy preserving machine learning (PPML) and application services. The homomorphic encryption operation apparatus 10 may perform an encryption process of encrypting an input value in PPML and application services.

In some embodiments the homomorphic encryption operation apparatus 10 may not have a space constraint or limit for storing secret keys, which may make it possible to adjust a size of a secret key vector and thus increase cryptographic security in a homomorphic encryption scheme and application services using/implementing the homomorphic encryption scheme.

The homomorphic encryption operation apparatus 10 may adjust a key storage space and a computational amount between a server and a client by changing a blind rotation key and procedures of preprocessing and blind rotation operations.

The homomorphic encryption operation apparatus 10 may be implemented in the form of a chip and mounted on a hardware accelerator that utilizes homomorphic encryption. The homomorphic encryption operation apparatus 10 may be implemented in the form of a chip or executable instructions to reduce memory usage of various operation apparatuses. The homomorphic encryption operation apparatus 10 may reduce a computational amount used to perform homomorphic encryption operations and may thereby reduce a total computational amount of a server.

The homomorphic encryption operation apparatus 10 may be implemented in a personal computer (PC), a data server, or a portable device.

A portable device may be, for example, a laptop computer, a mobile phone, a smartphone, a tablet PC, a mobile Internet device (MID), a personal digital assistant (PDA), an enterprise digital assistant (EDA), a digital still camera, a digital video camera, a portable multimedia player (PMP), a personal or portable navigation device (PND), a handheld game console, an e-book, a smart device, and the like. The smart device may include, for example, a smart watch, a smart band, and a smart ring.

The homomorphic encryption operation apparatus 10 may include a receiver 100 and a processor 200. The homomorphic encryption operation apparatus 10 may further include a memory 300.

The receiver 100 may include a receiving interface. The receiver 100 may receive a blind rotation key for performing a blind rotation operation and an operand ciphertext of the blind rotation operation. The operand ciphertext may be a learning with error (LWE) ciphertext.

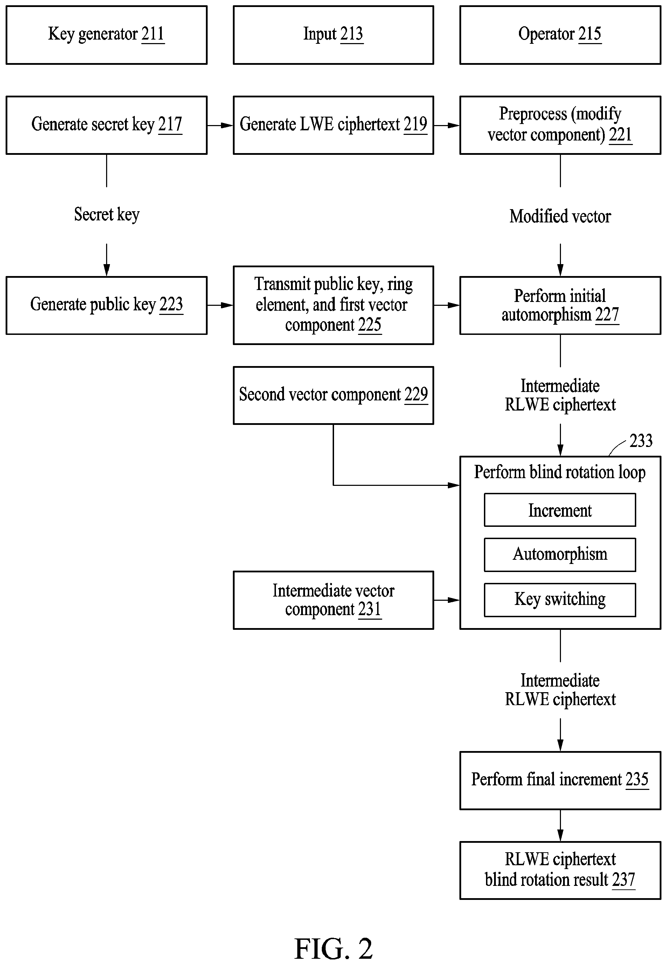

The blind rotation key may be a ring Gentry, Sahai, Waters (RGSW) ciphertext or an RLWE ciphertext. The blind rotation key may be generated based on a secret key corresponding to the operand ciphertext and based on a secret key corresponding to the RLWE ciphertext. The form of the blind rotation key may be determined by comparing a range of a vector component of the operand ciphertext with a degree of an RLWE ciphertext (e.g., a polynomial degree). A process of generating the blind rotation key will be described in detail with reference to FIG. 2. The receiver 100 may output the blind rotation key and the operand ciphertext to the processor 200.

The processor 200 may process data stored in the memory 300. The processor 200 may execute a computer-readable code (e.g., software embodied as physically stored instructions/code) stored in the memory 300 and instructions induced/generated by the processor 200.

The "processor 200" may be a data processing device embodied by hardware having a circuit of a physical structure to execute desired operations. For example, the desired operations may include code or instructions included in a program.

The hardware-implemented data processing device may include, for example, a microprocessor, a central processing unit (CPU), a processor core, a multi-core processor, a multiprocessor, an application-specific integrated circuit (ASIC), and/or a field-programmable gate array (FPGA). "Processor" used in the singular herein is shorthand for "one or more processors", i.e., any combination of suitable processing hardware.

The processor 200 may generate a preprocessed ciphertext by performing preprocessing on an operand ciphertext based on automorphism. The processor 200 may perform the preprocessing based on a vector component of a blind rotation key, a range of a vector component of an operand ciphertext, and a degree (e.g., polynomial degree) of an RLWE ciphertext.

The processor 200 may perform the preprocessing by obtaining a value by multiplying a value obtained by dividing the degree by the size of the range by the vector component of the blind rotation key, and determining whether the thus-obtained value is an even number. The processor 200 may generate a modified vector by modifying the vector component of the blind rotation key based on a result of the determining whether the value obtained by the multiplying is an even number. The modified vector may be referred to as a preprocessed ciphertext.

The processor 200 may generate an operation result of the homomorphic encryption by performing the blind rotation operation for the operand ciphertext on a vector component of the preprocessed ciphertext and a vector component of the blind rotation key.

The processor 200 may perform the blind rotation operation by performing an increment operation, an automorphism operation, and a key switching operation based on the preprocessed ciphertext.

The processor 200 may determine the form of a secret key used in the increment operation based on the vector component of the blind rotation key, the range of the vector component of the operand ciphertext, and the degree of the RLWE ciphertext.

The processor 200 may modify a vector component used in the increment operation based on the vector component of the blind rotation key, the size of the range of the vector component of the operand ciphertext, and the degree of the RLWE ciphertext.

The processor 200 may perform the automorphism operation based on a component of a modified vector component generated by modifying the vector component of the blind rotation key based on a result of determining whether the value obtained by the multiplying is an even number, and a reciprocal of the component of the modified vector.

The processor 200 may perform key switching based on a result of the automorphism operation.

The memory 300 may store instructions (or programs) executable by the processor 200. For example, the instructions include instructions for performing the operation of the processor 200 and/or an operation of each component of the processor 200.

The memory 300 may be embodied by a volatile or non-volatile memory device, which is not a signal per se.

A volatile memory device may be implemented as a dynamic random access memory (DRAM), a static random access memory (SRAM), a thyristor RAM (T-RAM), a zero capacitor RAM (Z-RAM), or a twin transistor RAM (TTRAM), for example. A non-volatile memory device may be implemented as an electrically erasable programmable read-only memory (EEPROM), a flash memory, a magnetic RAM (MRAM), a spin-transfer torque-MRAM (STT-MRAM), a conductive bridging RAM (CBRAM), a ferroelectric RAM (FeRAM), a phase change RAM (PRAM), a resistive RAM (RRAM), a nanotube RRAM, a polymer RAM (PoRAM), a nano-floating gate memory (NFGM), a holographic memory, a molecular electronic memory device, or an insulator resistance change memory, for example.

FIG. 2 illustrates example operations of the homomorphic encryption operation apparatus illustrated in FIG. 1. The phrase "the homomorphic encryption operation apparatus" refers to a variety of apparatuses as may be implemented according to the examples described herein; the phrase does not refer to a single specific apparatus but rather refers varying embodiments of a generic apparatus.

Referring to FIG. 2, a processor (for example, the processor 200 of FIG. 1) may perform a blind rotation operation by using automorphism. The processor 200 may change an LWE ciphertext vector component based on sizes and characteristics of the LWE ciphertext and the RLWE ciphertext. The processor 200 may perform the blind rotation based on the sizes and characteristics of the LWE ciphertext and the RLWE ciphertext.

When the number of even-numbered vector components of the LWE ciphertext necessary for the blind rotation operation is larger than the number of odd-numbered vector components, the processor 200 may reduce the amount of calculation of the blind rotation operation using automorphism.

When all of the vector components of the LWE ciphertext necessary for the operation are even numbers or when a degree of the RLWE ciphertext is a value greater than a predetermined value, the processor 200 may reduce the size of a public key.

The processor 200 may perform the blind rotation operation by dividing and replacing N (e.g., N is a natural number) RGSW ciphertexts with N + 1 RLWE' ciphertexts in the blind rotation operation process using automorphism, thereby reducing the size of the entire public key.

The ciphertext used by the processor 200 for the homomorphic encryption operation may be defined as below.

In an LWE ciphertext, a ciphertext of a message (or plaintext) $m$ may be represented as $(\beta, \vec{a}) \in Z_q^{n+1}$. The ciphertext may be decrypted as $\beta + \sum_{i=0}^{n-1} \alpha_i s_i = m + e \pmod{q}$. The term $LWE_{\vec{s}}(m)$ will refer to encryption of the message m using a secret key $\vec{s}$.

For an RLWE ciphertext, a ciphertext of the message $m$ may be represented as $(a, b) \in R_Q^2$. The ciphertext may be decrypted as $a \cdot z + b = m + e \pmod{Q}$. $RLWE_z(m)$ will refer to encryption of the message m using a secret key z.

The RLWE ciphertext of the message m using the secret key z may be defined as in Equation 1.

### Equation 1

$$\mathrm{RLWE}(m) = (a, a \cdot z + e + m)$$

Herein, $a$ represents a polynomial on Modulus Q and e represents an error polynomial having a small coefficient. When each encryption is performed, $a$ and $e$ may be randomly generated.

The RLWE' ciphertext of the message m with respect to the secret key s may be defined as in Equation 2.

### Equation 2

$$\mathrm{RLWE}'(m) = (\mathrm{RLWE}(g_0 \cdot m), \mathrm{RLWE}(g_1 \cdot m), ..., \mathrm{RLWE}(g_{d-1} \cdot m))$$

Herein, $(g_0, g_1, ..., g_{d-1})\cdot$, is a vector defined in advance to decompose an arbitrary integer, and may be set in the form of $(1, B, B^2, ..., B^{d-1})$ for an arbitrary integer $B$, or may be set in the form of $(\bar{Q}_0 \cdot [\bar{Q}_0^{-1}]_{q_0}, ..., \bar{Q}_{d-1} \cdot [\bar{Q}_{d-1}^{-1}]_{q_{d-1}})$ for $\bar{Q}_i = Q/q_i$.

The RGSW ciphertext of the message m for the secret key s may be defined by Equation 3 in terms of two RLWE' ciphertexts.

Equation 3

$$\mathrm{RGSW}(\boldsymbol{m}) = \left(\mathrm{RLWE'}(-\boldsymbol{zm}), \mathrm{RLWE'}(\boldsymbol{m})\right)$$

The homomorphic encryption operation performed by the processor 200 may be defined as below.

In the automorphism operation of the RLWE ciphertext, the automorphism $\psi_t$ of a polynomial ring may output $a(X^t)$ with respect to an element $a(X)$ of the polynomial ring, and spaces of the domain and the co-domain may be the same. In the RLWE ciphertext, the processor 200 may output $\left(a(X^t), b(X^t)\right) \in R_Q^2$ for an input $\left(a(X), b(X)\right) \in R_Q^2$ through the automorphism operation.

The processor 200 may obtain a ciphertext corresponding to a new secret key $\boldsymbol{z_2}$ from a ciphertext corresponding to a secret key $\boldsymbol{z_1}$ through a key switching operation. The processor 200 may obtain a new ciphertext $a \odot \mathrm{RLWE'_{z_2}}(\boldsymbol{s_1}) + (0, \boldsymbol{b}) = (\boldsymbol{a_2}, \boldsymbol{b_2}) \in R_Q^2$ having $\boldsymbol{z_2}$ as a secret key by using a switching key $\mathrm{RLWE'_{z_2}}(\boldsymbol{z_1})$, which is a public key for an input ciphertext

$$RLWE_{z_1}(\boldsymbol{u}) = (\boldsymbol{a_1}, \boldsymbol{b_2}) \in R_Q^2.$$

The processor 200 may perform the blind rotation operation. The processor 200 may output

$$\mathrm{RLWE}_{Q,z}\left(f \cdot Y^{\beta + \sum_{i=0}^{n-1} \alpha_i s_i}\right) = \mathrm{RLWE}_{Q,z}\left(f \cdot X^{\frac{2N}{q}\left(\beta + \sum_{i=0}^{n-1} \alpha_i s_i\right)}\right)$$ by performing the blind rotation operation by using a blind rotation key for an arbitrary function $f(X) \in R_Q$ and for a ciphertext $(\beta, \vec{\alpha}) \in \mathbb{Z}_q^{n+1}$.

The processor 200 may calculate $\beta + \sum_{i=0}^{n-1} \alpha_i s_i$ by using the blind rotation operation from a received operand ciphertext (e.g., the LWE ciphertext $(\beta, \vec{\alpha}) \in \mathbb{Z}_q^{n+1}$). The processor 200 may calculate an operation result of a message obtained by applying a function f in

$$\mathrm{RLWE}_{Q,z}\left(f \cdot X^{\frac{2N}{q}\left(\beta + \sum_{i=0}^{n-1} \alpha_i s_i\right)}\right) = \mathrm{RLWE}_{Q,z}\left(f \cdot X^{\left(\frac{2N}{q}\beta + \sum_{i=0}^{n-1}\frac{2N}{q}\alpha_i s_i\right)}\right)$$ . The processor 200 may reduce the size of the public key and the computational amount involved in the blind rotation process described above.

The processor 200 may analyze the automorphism existing in the homomorphic encryption using a key switching key and the blind rotation key for the automorphism operation to minimize the computational amount. The blind rotation key may include

$$\mathrm{RGSW}(X^{s_i}), \mathrm{RGSW}(X^{s_i + s_{i+1}}), \mathrm{RGSW}(X^{\Sigma s_i}).$$

The processor 200 may perform preprocessing on the ciphertext. The processor 200 may compare a range value q of the vector component of the LWE ciphertext with a degree 2N of the RLWE ciphertext. The processor 200 may generate a blind rotation key and a key switching key based on the comparison result.

In the process of calculating the blind rotation result, the processor 200 may generate a new vector $\vec{\omega}$ for performing the blind rotation operation based on each vector component of $\vec{\alpha}$ and based on the comparison result obtained by comparing the range value q of the vector component of the LWE ciphertext and the degree 2N of the RLWE ciphertext.

The processor 200 may perform the automorphism operation with respect to a vector component $\omega_i$ of the new vector. The processor 200 may perform an increment operation and a key switching operation to uniformly control the number of increment operations, which varies depending on a vector component in an update process.

When it is necessary to perform an additional operation according to a value of a vector $\vec{\omega}$ calculated in the preprocessing process, the processor 200 may update the RLWE ciphertext through the increment operation.

The processor 200 may perform the blind rotation operation by receiving the LWE ciphertext $(\beta, \vec{\alpha}) \in \mathbb{Z}_q^{n+1}$ for m through the process described above, and output $RLWE_{Q,z}(f \cdot X^{\frac{2N}{q}(\beta + \sum_{i=0}^{n-1} \alpha_i s_i)})$ as an operation result for the function $f$.

The processor 200 may include a key generator 211 and an operator 215. In the example of FIG. 2, an input 213 may represent input data used in the operator 215. The key generator 211 and the operator 215 may be implemented in different respective devices. For example, the key generator 211 may be implemented on a client, and the operator 215 may be implemented on a server. The operator 215 may be, for example, any application, cloud service, or the like that open performs operations on cryptographically secure data. The operations shown in Figure 2, while useful if divided between entities as shown, can be divided among more than two computing devices/nodes, may all be performed my one computing device, etc.

In operation 217, the key generator 211 may generate a secret key. In operation 223, the key generator 211 may generate a public key based on the secret key. The public key may include a blind rotation key. The key generator 211 may generate secret keys of the LWE ciphertext and the RLWE ciphertext. In operation 219, the key generator 211 may generate the LWE ciphertext based on the generated secret key.

In operation 225, the key generator 211 may generate a public key (e.g., a key switching key and a blind rotation key) for performing the automorphism operation, and transmit the public key to the operator 215 together with a first vector component. The key switching key may be used to return a result of an automorphism operation to its original value. The public key may be transmitted to the operator 215 in a wired or wireless manner.

In operation 221, the operator 215 may perform preprocessing for allowing the key generator 211 to determine which public key to generate. The operator 215 may modify the vector component of the received ciphertext.

The operator 215 may perform the blind rotation operation efficiently by modifying a component of the vector $\vec{\alpha}$ of the LWE ciphertext as the new vector $\vec{\omega}$. The operator 215 may output the modified vector to the key generator 211.

The operator 215 may update an RLWE ciphertext $RLWE_{Q,z}(f(X))$ by receiving the modified vector component and the public key as an input. In operation 227, the operator 215 may perform an initial automorphism operation for $RLWE_{Q,z}(f(X))$ as a first step of the update process. The operator 215 may generate an intermediate RLWE ciphertext as an operation result of the automorphism.

In operation 233, the operator 215 may perform the blind rotation operation by performing a blind rotation loop. The operator 215 may perform the automorphism operation based on a second vector component 229 and an intermediate vector component 231. The second vector component 229 may be used in an intermediate process for calculating an inner product of the first vector component and the secret key. The operator 215 may calculate an inner product of the second vector component 229 and the secret key and then calculate the inner product of the first vector component and the secret key through postprocessing.

The operator 215 may perform the increment operation, the key switching operation, and the automorphism operation for the vector component, in order to perform the update of the inner product $\sum_{i=0}^{n-1} \omega_i s_i$ of the vector $\vec{\omega}$ and the secret key $\vec{s}$.

In operation 235, the operator 215 may perform a final increment operation based on the intermediate RLWE ciphertext. In other words, the operator 215 may perform additional increment for a portion generated due to a difference between the vectors $\vec{\alpha}$ and $\vec{\omega}$.

The operator 215 may output an RLWE ciphertext $RLWE_{Q,z}(f \cdot X^{\frac{2N}{q}(\beta + \sum_{i=0}^{n-1} \alpha_i s_i)})$ as a result of the blind rotation.

Through the homomorphic encryption operation process described above, the processor 200 may provide a public key having a small size, regardless of a size of a vector component of a secret key, and may reduce the amount of related computational overhead. The processor 200 may perform the blind rotation operation rapidly while maintaining the integrity of the homomorphic encryption using a probability distribution having high security as a Gaussian distribution.

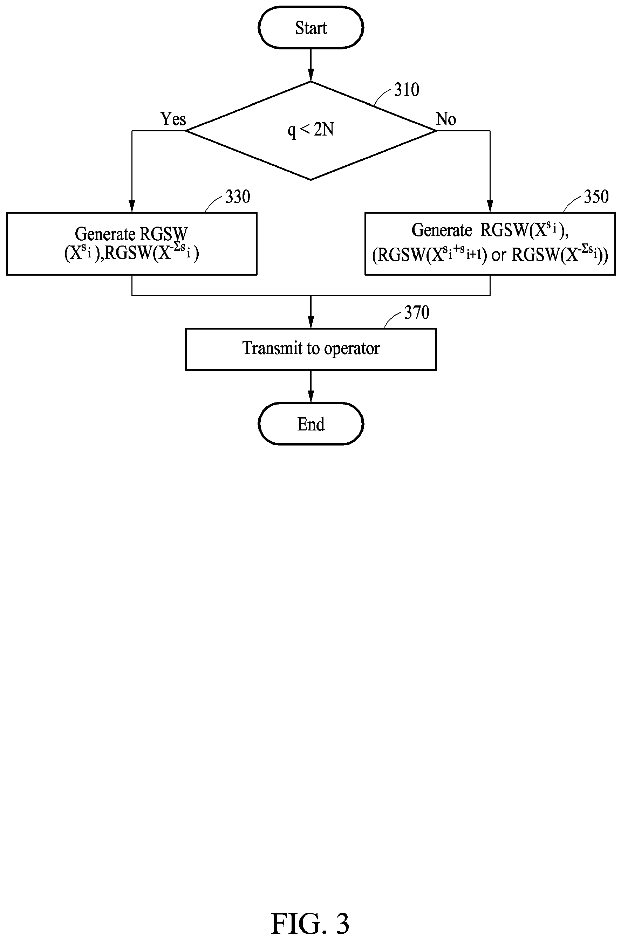

FIG. 3 illustrates an example of a key generation operation, according to one or more embodiments.

Referring to FIG. 3, the key generator (e.g., the key generator 211 of FIG. 2) may generate a blind rotation key based on a range of a vector component of an operand ciphertext and a degree of an RLWE ciphertext. The processor 200 may generate different types of blind rotation keys by comparing the range with the degree. Hereinafter, q is a natural number that represents a range of a vector component of an operand ciphertext and 2N represents a degree (e.g., a polynomial degree) of an RLWE ciphertext which may be a representation of a polynomial.

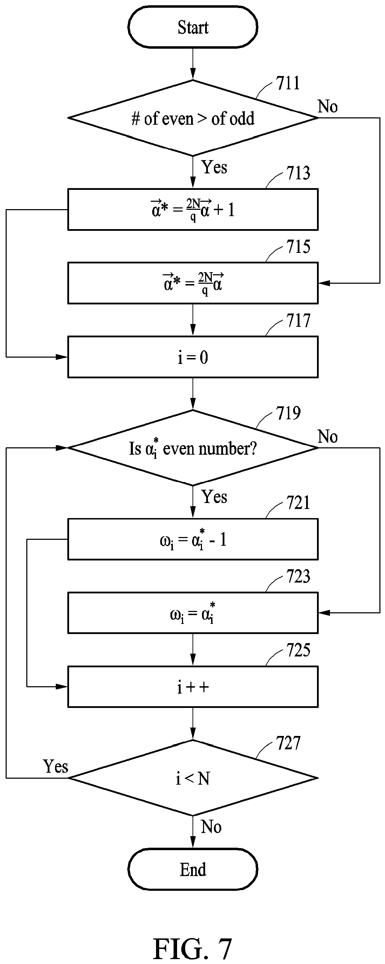

In operation 310, the key generator 211 may compare q with 2N. In operation 330, when q < 2N is satisfied,

$$\frac{2N}{q}\alpha_i$$

is always even. Therefore, the key generator 211 may generate only $RGSW(X^{s_i}), RGSW(X^{-\Sigma s_i})$ as the blind rotation key. The blind rotation operation process using $RGSW(X^{s_i}), RGSW(X^{-\Sigma s_i})$ as the blind rotation key will be described in detail with reference to FIGS. 7 to 9.

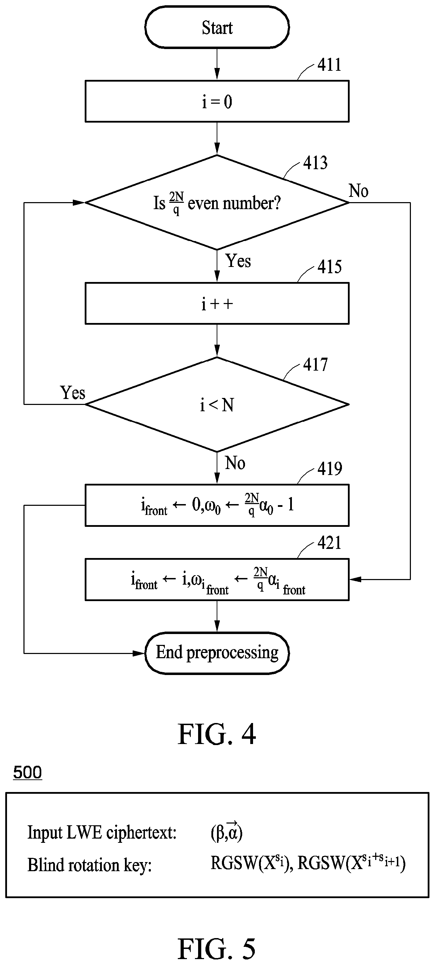

In operation 350, when q is greater than or equal to 2N, the key generator 211 may generate $RGSW(X^{s_i})$, $RGSW(X^{s_i + s_{i+1}})$ or $RGSW(X^{s_i})$, $RGSW(X^{-\Sigma s_i})$. When q is equal to 2N, 2N may be always divisible by q. In this case, q and 2N may be a power of 2. A case where the blind rotation key is $RGSW(X^{s_i})$, $RGSW(X^{s_i + s_{i+1}})$ will be described in detail with reference to FIGS. 4 to 6. Even in a case where q is equal to 2N, the key generator 211 may generate $RGSW(X^{s_i})$, $RGSW(X^{-\Sigma s_i})$ as the blind rotation key, in order to reduce the computational amount while preventing an increase of a key size.

Hereinafter, the homomorphic encryption operation process will be described with reference to FIGS. 4 to 6.

FIG. 4 illustrates an example of a preprocessing operation, according to one or more embodiments.

Referring to FIG. 4, the operator (e.g., the operator 215 of FIG. 2) may perform the preprocessing. The operator 215 may perform the preprocessing based on the range q of the vector component of the operand ciphertext and the degree 2N of the RLWE ciphertext.

The operator 215 may find an initial vector component, for which the automorphism operation may be performed,

$$\frac{2N}{q}\vec{\alpha}$$

among vector components of , and when there is no vector component for the automorphism operation (e.g., when all vector components are even), the operator 215 may generate the new vector $\vec{\omega}$.

In operation 411, the operator 215 may set the variable i to be 0. The operator 215 may determine whether a

$$\frac{2N}{q}\alpha_i$$

vector component of is an even number. Specifically, in operation 413, the operator 215 may determine whether 2N/q is an even number.

In operation 415, when 2N/q is an even number, the operator 215 may add 1 to i. In operation 421, when 2N/q

$$\omega_{i_{front}} = \frac{2N}{q}\alpha_{i_{front}}$$

is not an even number, the operator 215 may set $i_{front}$ to a value i and perform .

In operation 417, the operator 215 may determine whether i is less than N. In operation 419, when i is less than N, the operator 215 may repeat operation 413, and when i is greater than or equal to N, the operator 215 may set $i_{front}$

$$\frac{2N}{q}\alpha_0 - 1$$

to 0 and set $\omega_0$ to .

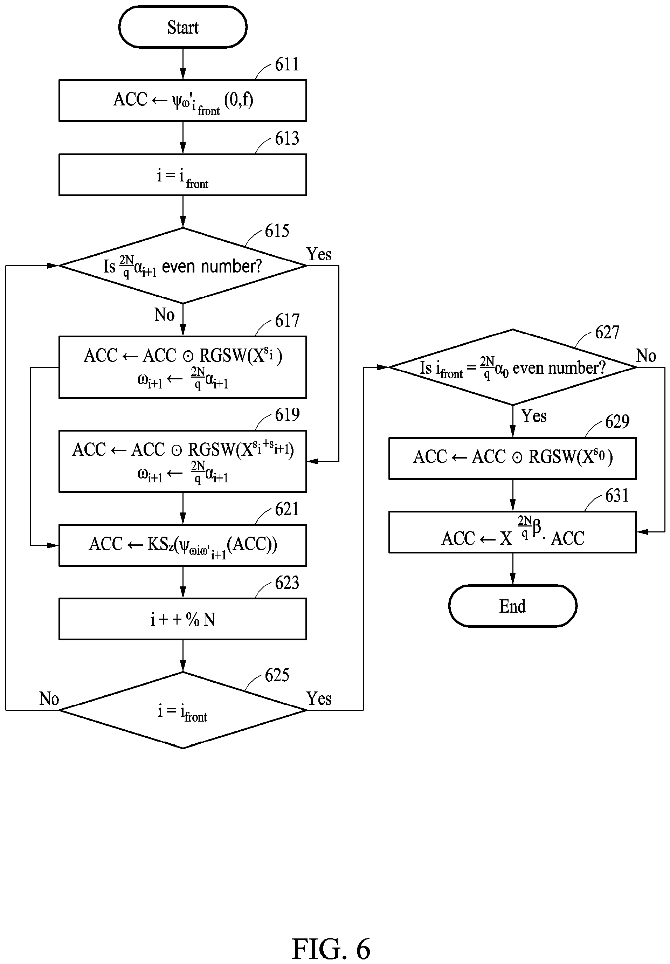

FIG. 5 illustrates an example 500 of an input ciphertext and a blind rotation key, according to one or more embodiments. FIG. 6 illustrates an example of a blind rotation operation, according to one or more embodiments.

Referring to FIGS. 5 and 6, a key generator (e.g., the key generator 211 of FIG. 2) may generate $RGSW(X^{s_i})$, $RGSW(X^{s_i + s_{i+1}})$ as the blind rotation key and generate an LWE ciphertext as an operand ciphertext. The key generator 211 may generate a key switching key and the blind rotation key for the automorphism operation using a secret key $\vec{S}$ of the LWE ciphertext and a secret key z of the RLWE ciphertext.

An operator (e.g., the operator 215 of FIG. 2) may output the RLWE ciphertext

$$RLWE_{Q,z}\left(f \cdot X^{\frac{2N}{q}(\beta + \sum_{i=0}^{n-1} \alpha_i s_i)}\right)$$

as an operation result by performing the blind rotation operation based on the operand ciphertext and the blind rotation key received from the key generator 211.

The operator 215 may update a value $\omega_{i+1}$ by performing the automorphism operation, the increment operation, and the key switching operation based on the new vector component $\omega_i$ and $i_{front}$ obtained in the preprocessing process.

In operation 611, the operator 215 may perform an initial automorphism operation. The operator 215 may represent a function $f(X)$ in the form of the RLWE ciphertext for the blind rotation operation. The operator 215 may perform the initial automorphism operation by performing the automorphism operation for $\omega'_{i_{front}}$, which is the reciprocal of $\omega_{i_{front}}$.

In operation 613, the operator 215 may determine a first vector component by performing $i = i_{front}$. In operation 615, the operator 215 may determine whether $\frac{2N}{q}\alpha_{i+1}$ is an even number.

In operation 617, when $\frac{2N}{q}\alpha_{i+1}$ is not an even number, the operator 215 may perform the increment operation for RGSW($X^{si}$) to set $\omega_{i+1} = \frac{2N}{q}\alpha_{i+1}$. In operation 619, when $\frac{2N}{q}\alpha_{i+1}$ is an even number, the operator 215 may perform the increment operation for RGSW($X^{s_i+s_{i+1}}$) to set $\omega_{i+1} = \frac{2N}{q}\alpha_{i+1} - \omega_i$.

After that, in operation 621, the operator 215 may perform the automorphism operation for $\omega_i\omega'_{i+1}$ and perform the key switching operation for restoring the secret key to the original secret key z. At that time, $\omega'_{i+1}$ may refer to a reciprocal of $\omega_{i+1}$.

In operation 623, the operator 215 may increase i and perform the operation for a next index. In operation 625, the operator 215 may determine whether a new i satisfies a condition of $i = i_{front}$. When the condition in operation 625 is not satisfied, the operator 215 may repeat operation 615, and when the condition in operation 625 is satisfied, in operation 627, the operator 215 may determine whether $\frac{2N}{q}\vec{\alpha}$ is an even number. In operation 629, when $\frac{2N}{q}\vec{\alpha}$ is an even number, the operator 215 may perform the increment operation for RGSW($X^{s_0}$) to compensate the subtraction performed in the preprocessing process (e.g., operation 419).

In operation 631, when $\frac{2N}{q}\vec{\alpha}$ is not an even number or operation 629 is performed, the operator 215 may multiply $X^\beta$ by a result value.

Through the process described above, the processor (e.g., the processor 200 of FIG. 1) may obtain a blind rotation key in the form of 2n RGSW ciphertexts and a key switching key in the form of N - 1 or q - 1 RLWE' ciphertexts, regardless of the size of the secret key and $\vec{\alpha}$ in the homomorphic encryption.

The processor 200 may perform n increment operations in total by using the generated public key, and when all vector components are even, the processor 200 may perform n + 1 increment operations. In the increment operation, the processor 200 may perform an operation of RLWE $\odot$ RGSW and perform $R_Q \odot$ RLWE' in n times of key switching operation.

The public key may include 4n + N - 1 or 4n + q - 1 RLWE' ciphertexts depending on the size of q, and the computational amount may be reduced, since 3n or 3n + 2 operations are performed.

Hereinafter, the homomorphic encryption operation process according to another example will be described with reference to FIGS. 7 to 9.

FIG. 7 illustrates another example of a preprocessing operation, according to one or more embodiments.

Referring to FIG. 7, an operator (e.g., the operator 215 of FIG. 2) may perform preprocessing. The operator 215 may perform the preprocessing based on the vector component of the blind rotation key, the range q of the vector component of the operand ciphertext, and the degree 2N of the RLWE ciphertext.

According to the example of FIGS. 7 to 9, the operator 215 may perform the blind rotation operation efficiently when the number of even-numbered vector components of $\frac{2N}{q}\vec{\alpha}$ is larger than the number of odd-numbered vector components.

The operator 215 may output an operation result

$$RLWE_{Q,z}\left(f \cdot X^{\frac{2N}{q}\left(\beta+\sum_{i=0}^{n-1}\alpha_i s_i\right)}\right)$$

by receiving the blind rotation key RGSW($X^{s_i}$), RGSW($X^{-\Sigma s_i}$) and the LWE ciphertext ($\beta, \vec{\alpha}$).

The operator 215 may generate $\vec{\alpha^*}$ based on the number of even and odd-numbered components and generate a new vector $\vec{\omega}$ to perform the automorphism operation based on each component of $\vec{\alpha^*}$.

In operation 711, the operator 215 may determine whether the number of even-numbered components is larger than the number of odd-numbered components among the vector components of $\frac{2N}{q}\vec{\alpha}$. In operation 713, when the number of even-numbered components is large, the operator 215 may calculate $\overrightarrow{\alpha^*} \leftarrow \frac{2N}{q}\vec{\alpha} + 1$. In operation 715, when the number of even-numbered components is smaller than or equal to the number of odd-numbered components, the operator 215 may calculate $\overrightarrow{\alpha^*} \leftarrow \frac{2N}{q}\vec{\alpha}$. Then, in operation 717, the operator 215 may set i to be 0.

In operation 719, the operator 215 may determine whether each vector component $\alpha_i^*$ is even. In operation 721, when $\alpha_i^*$ is an even number, the operator 215 may calculate $\omega_i = \alpha_i^* - 1$. In operation 723, when $\alpha_i^*$ is an odd number, the operator 215 may perform $\omega_i = \alpha_i^*$. Then, the operator 215 may increment i. In operation 727, the operator 215 may determine whether i is smaller than N. When i is smaller than N, the operator 215 may repeat operation 719, and when i is greater than or equal to N, the operator 215 may end the preprocessing.

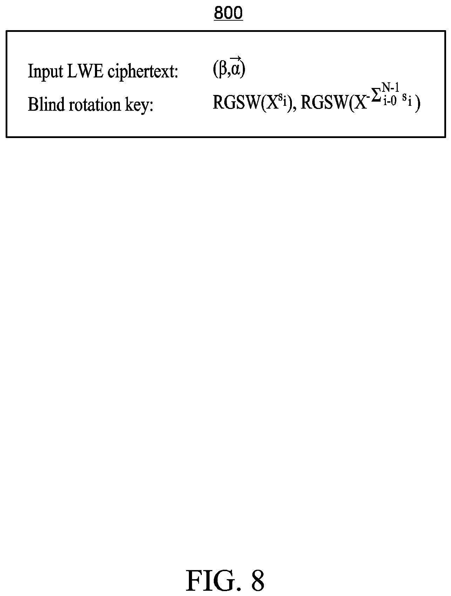

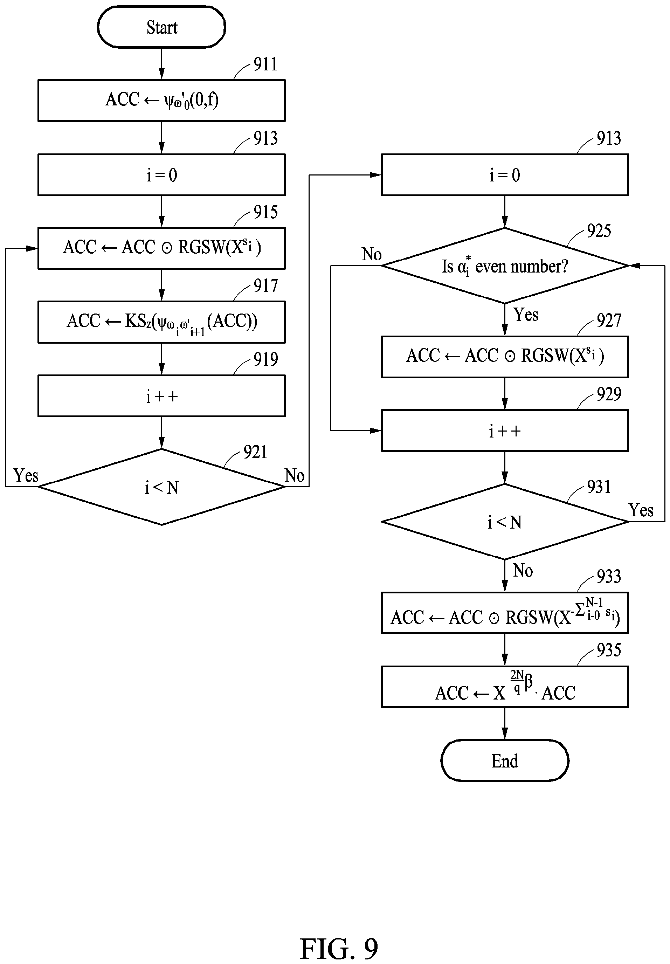

FIG. 8 illustrates another example 800 of an input ciphertext and a blind rotation key, according to one or more embodiments. FIG. 9 illustrates another example of a blind rotation operation, according to one or more embodiments.

Referring to FIGS. 8 and 9, a key generator (e.g., the key generator 211 of FIG. 2) may generate a key switching key and a blind rotation key RGSW($X^{s_i}$), RGSW($X^{-\Sigma s_i}$), respectively, for the automorphism operation based on a secret key $\vec{S}$ of an LWE ciphertext and a secret key z of an RLWE ciphertext, and may transmit the key switching key and the blind rotation key to an operator (e.g., the operator 215 of FIG. 2).

When the number of even-numbered components is larger than the number of odd-numbered components among vector components of $\frac{2N}{q}\vec{\alpha}$, the operator 215 may efficiently perform the blind rotation operation. The operator 215 may perform the automorphism operation, the increment operation, and the key switching operation for a vector component $\omega_i$ of a modified vector $\vec{\omega}$ generated through the preprocessing process, and may then perform the increment operation for RGSW($X^{-\Sigma \cdot s_i}$).

In operation 911, the operator 215 may perform an initial automorphism operation. The operator 215 may represent a function $f(X)$ in the form of an RLWE ciphertext and perform the initial automorphism operation by performing the automorphism operation for a reciprocal $\omega_0'$ of $\omega_0$.

In operation 913, the operator 215 may determine a first vector component by replacing i with 0. In operation 915, the operator 215 may perform the increment operation for RGSW($X^{s_i}$)

In operation 917, the operator 215 may perform the automorphism operation for $\omega_i \omega_{i+1}'$ and perform the key switching operation to restore the secret key to the original secret key z. In this case, $\omega_{i+1}'$ is the reciprocal of $\omega_{i+1}$.

In operation 919, the operator 215 may increment i. In operation 921, the operator 215 may determine whether i is smaller than N. When i is smaller than N, the operator 215 may repeat operation 915. In operation 913, when i is greater than or equal to N, the operator 215 may set i to be 0.

In operation 925, the operator 215 may determine whether $\alpha_i^*$ is an even number. In * operation 927, when

$\alpha_i^*$ is an even number, the operator 215 may perform the increment operation for RGSW($X^{s_i}$) to compensate for the subtraction performed in operation 721 of FIG. 7. In operation 929, when $\alpha_i^*$ is an even number or the increment operation in operation 927 is performed, the operator 215 may increase i.

In operation 931, the operator 215 may determine whether i is smaller than N. When i is smaller than N, the operator 215 may repeat operation 925. In operation 933, when i is greater than or equal to N, the operator 215 may perform the increment operation for RGSW($X^{-\Sigma}{}_i$).

In operation 935, the operator 215 may multiply $X^\beta$ by a result value and complete the blind rotation operation.

Through the operations of the examples of FIGS. 7 to 9, a processor (e.g., the processor 200 of FIG. 1) may generate a blind rotation key in the form of n + 1 RGSW ciphertexts and a key switching key in the form of N - 1 or q - 1 RLWE' ciphertexts, regardless of the size of the secret key and $\vec{\alpha}$ in the homomorphic encryption.

When the processor 200 uses the generated public key, the number of cases where the vector component of $\vec{\alpha}^*$ is an even number may be $\dfrac{n}{2}$, and the operation of RLWE ⊙ RGSW may be performed $n + \dfrac{n}{2}$ times in the increment operation. Further, the operation of $R_Q$ ⊙ RLWE' may be performed n times in the key switching operation.

The size of the public key may have the size of 2n + N + 1 or 2n + q + 1 RLWE' ciphertexts according to the size of q, and at most the operation may be performed 4n times. In other words, the processor 200 may reduce the size and computational amount of the public key through the operation process described above.

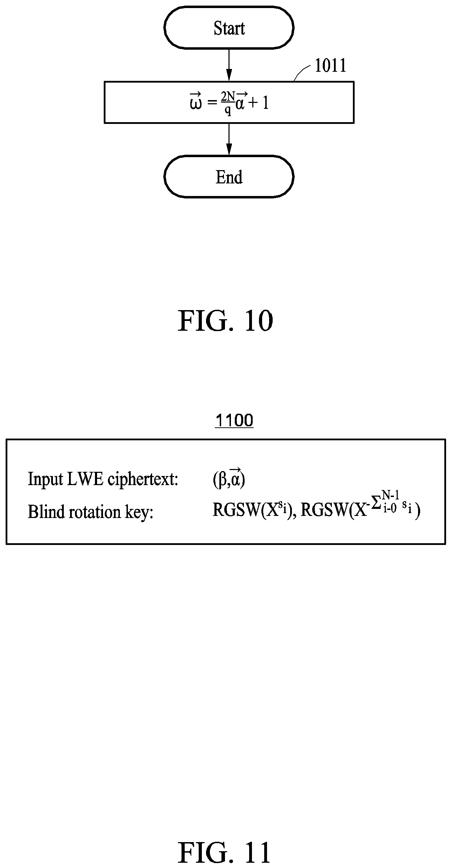

Hereinafter, the homomorphic encryption operation process according to another example is described next with reference to FIGS. 10 to 12.

FIG. 10 illustrates still another example of a preprocessing operation, according to one or more embodiments.

Referring to FIG. 10, when all components of $\dfrac{2N}{q}\vec{\alpha}$ are even numbers, an operator (e.g., the operator 215 of FIG. 2) may perform the blind rotation operation efficiently with respect to an operand ciphertext (e.g., an input LWE ciphertext) ($\beta, \vec{\alpha}$).

The operator 215 may output an RLWE ciphertext $\mathrm{RLWE}_{Q,z}\left(f \cdot X^{\frac{2N}{q}(\beta + \sum_{i=0}^{n-1} \alpha_i s_i)}\right)$ as an operation result based on RGSW($X^{s_i}$), RGSW($X^{-\Sigma s_i}$) and the LWE ciphertext ($\beta, \vec{\alpha}$).

The operator 215 may generate a modified vector $\vec{\omega}$ using $\dfrac{2N}{q}\vec{\alpha}$. In operation 1011, the operator 215 may generate the modified vector by calculating $\vec{\omega} = \dfrac{2N}{q}\vec{\alpha} + 1$.

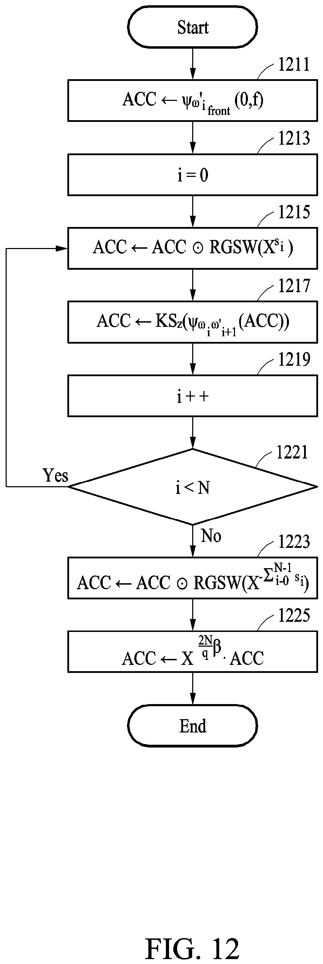

FIG. 11 illustrates still another example 1100 of an input ciphertext and a blind rotation key, according to one or more embodiments. FIG. 12 illustrates still another example of a blind rotation operation, according to one or more embodiments.

Referring to FIGS. 11 and 12, a key generator (e.g., the key generator 211 of FIG. 2) may generate a key switching key and a blind rotation key RGSW($X^{s_i}$), RGSW($X^{-\Sigma s_i}$), respectively, for the automorphism operation based on a secret key $\vec{S}$ of an LWE ciphertext and a secret key z of an RLWE ciphertext, and transmit the key switching key and the blind rotation key to an operator (e.g., the operator 215 of FIG. 2).

The example of FIG. 12 may illustrate a process of performing the blind rotation operation when all the vector components of $\dfrac{2N}{q}\vec{\alpha}$ are even numbers. The operator 215 may perform the automorphism operation, the increment operation, and the key switching operation for a vector component $\omega_i$ of a modified vector $\vec{\omega}$ generated through the preprocessing process, and perform the increment operation for RGSW($X^{-\Sigma s_i}$).

In operation 1211, the operator 215 may perform an initial automorphism operation. The operator 215 may represent a function $f(X)$ in the form of an RLWE ciphertext and perform the initial automorphism operation by performing the automorphism operation for the reciprocal $\omega_0'$ of $\omega_0$.

In operation 1213, the operator 215 may determine a first vector component by setting i to be 0. In operation 1215, the operator 215 may perform the increment operation for RGSW($X^{s_j}$).

In operation 1217, the operator 215 may perform the automorphism operation for $\omega_i \omega'_{i+1}$ and perform the key switching operation to restore the secret key to the original secret key z. In this case, $\omega'_{i+1}$ may refer to a reciprocal of $\omega_{i+1}$.

In operation 1219, the operator 215 may increment i. In operation 1221, the operator 215 may determine whether i is smaller than N. When i is smaller than N, the operator 215 may repeat operation 1215. In operation 1223, when i is greater than or equal to N, the operator 215 may perform the increment operation for RGSW($X^{-\Sigma s_i}$) to compensate the vector transformation performed in operation 1011 of FIG. 10.

In operation 1225, the operator 215 may multiply $X^\beta$ by a result value and end the blind rotation operation.

Through the examples of FIGS. 10 to 12, a processor (e.g., the processor 200 of FIG. 1) may perform the homomorphic encryption operation efficiently when all the vector components of $\vec{\alpha}$ are even numbers in the homomorphic encryption or when q ≤ N and q | N are satisfied.

The processor 200 may generate the public key as the blind rotation key in the form of n + 1 RGSW ciphertexts and the key switching key in the form of N - 1 or q RLWE' ciphertexts.

When the processor 200 uses the generated public key, n + 1 performances of operation RLWE ⊙ RGSW may be required in the increment operation and n performances of operation $R_Q$ ⊙ RLWE' may be required in the key switching operation.

The size of the public key may have the size of 2n + N + 1 or 2n + q + 1 RLWE' ciphertexts according to the size of q, and 3n + 2 times of operation to be performed. In other words, the processor 200 may reduce the size and associated computational amount of the public key through the process described above.

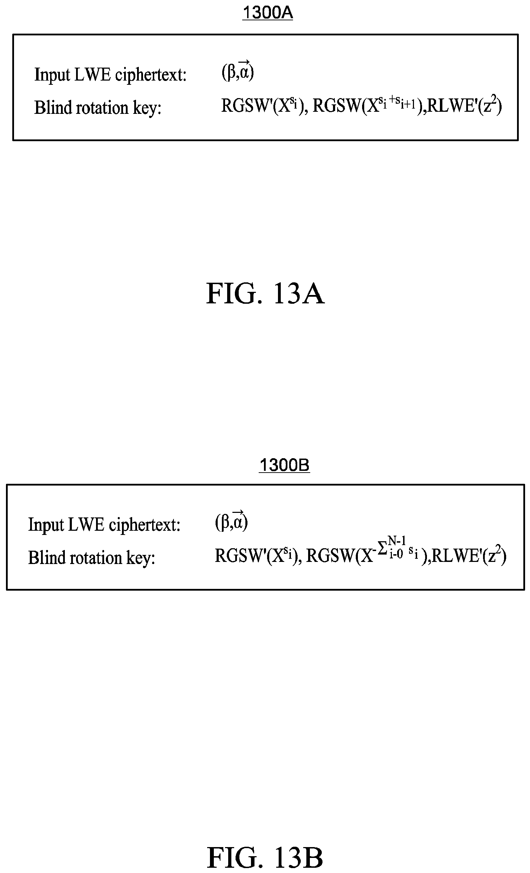

FIGS. 13A and 13B illustrate examples 1300A and 1300B of an in-ciphertext and a blind rotation key.

Referring to FIGS. 13A and 13B, a processor (e.g., the processor 200 of FIG. 1) may generate a public key in the form of an RLWE' ciphertext instead of an RGSW ciphertext.

By using the RLWE' ciphertext, the size of the public key transmitted by a key generator (e.g., the key generator 211 of FIG. 2) to an operator (e.g., the operator 215 of FIG. 2) may be reduced.

However, since three operations of $R_Q$ ⊙ RLWE' are performed instead of the operation of one performance of RLWE ⊙ RGSW, the computation amount performed by the operator 215 may be increased for the blind rotation operation.

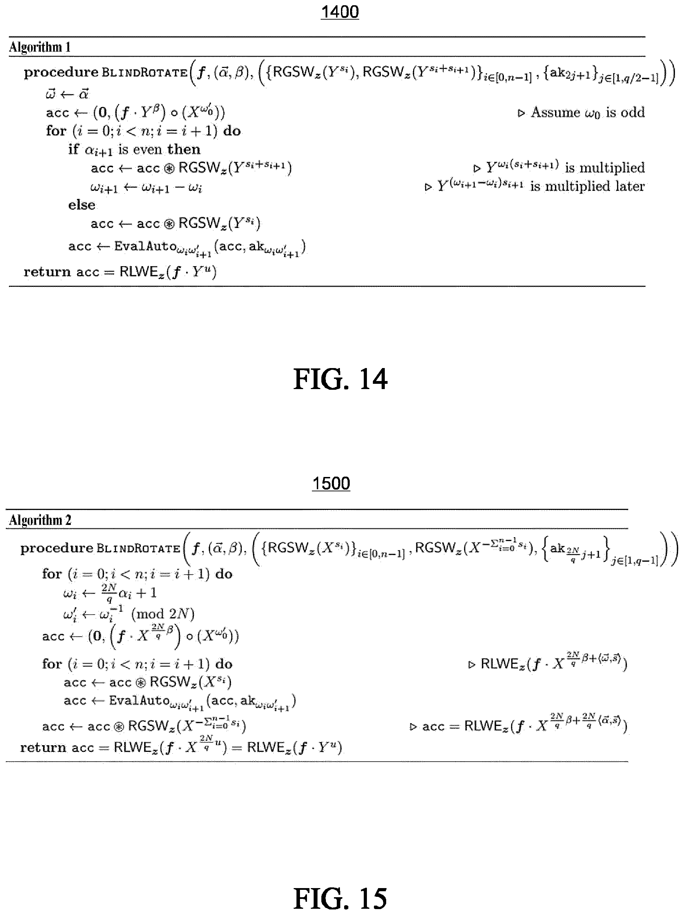

FIG. 14 illustrates an example 1400 of an algorithm of a blind rotation operation, according to one or more embodiments. FIG. 15 illustrates another example 1500 of an algorithm of a blind rotation operation, according to one or more embodiments.

Referring to FIGS. 14 and 15, an algorithm 1 of FIG. 14 shows the example of FIGS. 4 to 6 in the form of pseudocode and an algorithm 2 of FIG. 15 shows the example of FIGS. 7 to 9 in the form of pseudocode.

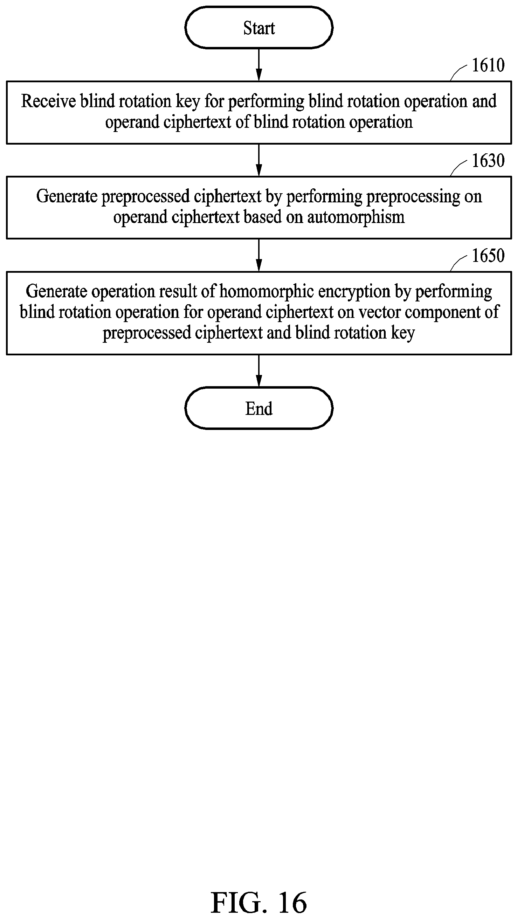

FIG. 16 illustrates an example of an operation of the homomorphic encryption operation apparatus illustrated in FIG. 1.

Referring to FIG. 16, in operation 1610, a receiver (e.g., the receiver 100 of FIG. 1) may receive a blind rotation key for performing a blind rotation operation and an operand ciphertext of the blind rotation operation. The operand ciphertext may be an LWE ciphertext.

The blind rotation key may include an RGSW ciphertext or an RLWE' ciphertext. The blind rotation key may be generated based on a secret key corresponding to the operand ciphertext and a secret key corresponding to the RLWE ciphertext. The form of the blind rotation key may be determined by comparing a range of a vector component of the operand ciphertext with a degree of an RLWE ciphertext.

In operation 1630, a processor (e.g., the processor 200 of FIG. 1) may generate a preprocessed ciphertext by performing preprocessing on the operand ciphertext based on automorphism. The processor 200 may perform preprocessing based on the vector component of the blind rotation key, the range of the vector component of the operand ciphertext, and the degree of the RLWE ciphertext.

The processor 200 may perform the preprocessing by determining whether a value obtained by multiplying a value, which is obtained by dividing the degree by the range, by the vector component of the blind rotation key is an even number. The processor 200 may generate a modified vector by modifying the vector component of the blind rotation key based on a result of determining whether the value obtained by the multiplying is an even number.

In operation 1650, the processor 200 may generate an operation result of the homomorphic encryption by performing the blind rotation operation for the operand ciphertext on a vector component of the preprocessed ciphertext and the blind rotation key.

The processor 200 may perform the blind rotation operation by performing an increment operation, an automorphism operation, and a key switching operation based on the preprocessed ciphertext.

The processor 200 may determine the form of a secret key used in the increment operation based on the vector component of the blind rotation key, the range of the vector component of the operand ciphertext, and the degree of the RLWE ciphertext.

The processor 200 may modify a vector component used in the increment operation based on the vector component of the blind rotation key, the range of the vector component of the operand ciphertext, and the degree of the RLWE ciphertext.

The processor 200 may perform the automorphism operation based on a component of a modified vector generated by modifying the vector component of the blind rotation key based on a result of determining whether the value obtained by the multiplying is an even number, and based on a reciprocal of the component of the modified vector.

The processor 200 may perform key switching based on a result of the automorphism operation.

It will be appreciated that although the embodiments disclosed herein are described in part with mathematical notation, such mathematical notation is a convenient and efficient way of describing operations to be performed in the form of code, circuitry, or the like by computing devices. An ordinary engineer can readily translate the operations described herein into circuit configurations and/or computer-executable instructions and thereby provide the beneficial cryptographic systems described herein.

The computing apparatuses, the processors, the memories, the displays, the information output system and hardware, the storage devices, and other apparatuses, devices, units, modules, and components described herein with respect to FIGS. 1-16 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-16 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims.

**Claims**

1. A computing apparatus, comprising:
   one or more processors; and:
   a memory storing instructions configured to cause the one or more processors to, for a blind rotation key for performing a blind rotation operation and an operand ciphertext of the blind rotation operation:

      generate a preprocessed ciphertext by performing preprocessing on the operand ciphertext based on automorphism; and
      generate an operation result of the homomorphic encryption by performing the blind rotation operation for the operand ciphertext on a vector component of the preprocessed ciphertext and on a vector component of the blind rotation key.

2. The computing apparatus of claim 1, wherein

   the operand ciphertext comprises a learning with error, LWE, ciphertext, and
   the blind rotation key comprises a ring Gentry, Sahai, Waters, RGSW, ciphertext or ring learning with error, RLWE, ciphertext.

3. The computing apparatus of claim 1 or 2, wherein the blind rotation key is generated based on a secret key corresponding to the operand ciphertext and a secret key corresponding to an RLWE ciphertext.

4. The computing apparatus of one of claims 1 to 3, wherein a form of the blind rotation key is determined by comparing a range of a vector component of the operand ciphertext with a degree of an RLWE ciphertext.

5. The computing apparatus of one of claims 1 to 4, wherein the instructions are further configured to cause the one or more processors to:
perform the preprocessing based on the vector component of the blind rotation key, a range of a vector component of the operand ciphertext, and a degree of an RLWE ciphertext.

6.  The computing apparatus of one of claims 1 to 5, wherein the instructions are further configured to cause the one or more processors to:
perform the preprocessing by determining whether a value obtained by multiplying a value, which is obtained by dividing the degree by the range, by the vector component of the blind rotation key is an even number.

7.  The computing apparatus of one of claims 1 to 6, wherein the instructions are further configured to cause the one or more processors to:
generate a modified vector by modifying the vector component of the blind rotation key based on a result of determining whether the value obtained by the multiplying is the even number.

8.  The computing apparatus of one of claims 1 to 7, wherein the instructions are further configured to cause the one or more processors to:
perform the blind rotation operation by performing an increment operation, an automorphism operation, and a key switching operation based on the preprocessed ciphertext.

9.  The computing apparatus of one of claims 1 to 8, wherein the instructions are further configured to cause the one or more processors to:

    determine a form of a secret key used in an increment operation based on the vector component of the blind rotation key, a range of a vector component of the operand ciphertext, and a degree of an RLWE ciphertext; and
    modify a vector component used in the increment operation based on the vector component of the blind rotation key, the range of the vector component of the operand ciphertext, and the degree of the RLWE ciphertext.

10. The computing apparatus of one of claims 1 to 9, wherein the instructions are further configured to cause the one or more processors to:

    perform an automorphism operation based on a component of a modified vector generated by modifying a vector component of the blind rotation key based on a result of determining whether the value obtained by the multiplying is an even number, and a reciprocal of the component of the modified vector; and
    perform key switching based on a result of the automorphism operation.

11. An operation method of homomorphic encryption performed by a computing device comprising storage hardware and processing hardware, the operation method comprising:

    receiving a blind rotation key for performing a blind rotation operation and an operand ciphertext of the blind rotation operation and storing the blind rotation key in the storage hardware;
    generating, by the processing hardware, a preprocessed ciphertext by performing preprocessing on the operand ciphertext based on automorphism; and
    generating, by the processing hardware, an operation result of the homomorphic encryption by performing the blind rotation operation for the operand ciphertext on a vector component of the preprocessed ciphertext based on the blind rotation key.

12. The operation method of claim 11, wherein

    the operand ciphertext comprises a learning with error, LWE, ciphertext, and
    the blind rotation key comprises a ring Gentry, Sahai, Waters, RGSW, ciphertext or ring learning with error, RLWE, ciphertext.

13. The operation method of claim 11 or 12, wherein the blind rotation key is generated based on a secret key corresponding to the operand ciphertext and a secret key corresponding to an RLWE ciphertext.

14. The operation method of one of claims 11 to 13, wherein a form of the blind rotation key is determined by comparing a range of a vector component of the operand ciphertext with a degree of an RLWE ciphertext.

**15.** The operation method of one of claims 11 to 14, wherein the generating of the preprocessed ciphertext comprises: performing the preprocessing based on a vector component of the blind rotation key, a range of a vector component of the operand ciphertext, and a degree of an RLWE ciphertext.

FIG. 1

FIG. 2

Start

$q < 2N$ — 310

Yes

No

Generate RGSW $(X^{s_i})$, RGSW$(X^{-\Sigma s_i})$ — 330

Generate RGSW$(X^{s_i})$, (RGSW$(X^{s_i+s_{i+1}})$ or RGSW$(X^{-\Sigma s_i})$) — 350

Transmit to operator — 370

End

## FIG. 3

Start

411

$i = 0$

413

Is $\frac{2N}{q}$ even number? — No

Yes

415

$i++$

417

$i < N$

Yes

No

419

$i_{front} \leftarrow 0, \omega_0 \leftarrow \frac{2N}{q}\alpha_0 - 1$

421

$i_{front} \leftarrow i, \omega_{i\,front} \leftarrow \frac{2N}{q}\alpha_{i\,front}$

End preprocessing

FIG. 4

500

| Input LWE ciphertext: | $(\beta, \vec{\alpha})$ |
|---|---|
| Blind rotation key: | $RGSW(X^{s_i}), RGSW(X^{s_i + s_{i+1}})$ |

FIG. 5

Start

611
$ACC \leftarrow \psi'_{\omega'_{i_{front}}}(0,f)$

613
$i = i_{front}$

615
Is $\frac{2N}{q}\alpha_{i+1}$ even number?

No / Yes

617
$ACC \leftarrow ACC \odot RGSW(X^{s_i})$
$\omega_{i+1} \leftarrow \frac{2N}{q}\alpha_{i+1}$

619
$ACC \leftarrow ACC \odot RGSW(X^{s_i+s_{i+1}})$
$\omega_{i+1} \leftarrow \frac{2N}{q}\alpha_{i+1}$

621
$ACC \leftarrow KS_z(\psi_{\omega i\omega'_{i+1}}(ACC))$

623
$i{+}{+}\% N$

625
$i = i_{front}$

No / Yes

627
Is $i_{front} = \frac{2N}{q}\alpha_0$ even number?

Yes / No

629
$ACC \leftarrow ACC \odot RGSW(X^{s_0})$

631
$ACC \leftarrow X^{\frac{2N}{q}\beta} \cdot ACC$

End

# FIG. 6

FIG. 7

<u>800</u>

Input LWE ciphertext: $(\beta, \vec{\alpha})$

Blind rotation key: $RGSW(X^{s_i})$, $RGSW(X^{-\sum_{i-0}^{N-1} s_i})$

FIG. 8

Start

911

$ACC \leftarrow \psi_{\omega'_0}(0,f)$

913

$i = 0$

915

$ACC \leftarrow ACC \odot RGSW(X^{s_i})$

917

$ACC \leftarrow KS_z(\psi_{\omega_i,\omega'_{i+1}}(ACC))$

919

$i++$

921

Yes ← $i < N$ → No

913

$i = 0$

925

No ← Is $\alpha_i^*$ even number? → Yes

927

$ACC \leftarrow ACC \odot RGSW(X^{s_i})$

929

$i++$

931

$i < N$ → Yes

No

933

$ACC \leftarrow ACC \odot RGSW(X^{-\Sigma_{i-0}^{N-1} s_i})$

935

$ACC \leftarrow X^{\frac{2N}{q}\beta} \cdot ACC$

End

FIG. 9

Start

$$\vec{\omega} = \frac{2N}{q}\vec{\alpha} + 1$$

/ 1011

End

# FIG. 10

1100

| Input LWE ciphertext: | $(\beta, \vec{\alpha})$ |
|---|---|
| Blind rotation key: | $RGSW(X^{s_i}), RGSW(X^{-\sum_{i-0}^{N-1} s_i})$ |

# FIG. 11

$$ACC \leftarrow \psi'_{\omega'_{i_{front}}}(0,f)$$ — 1211

$$i = 0$$ — 1213

$$ACC \leftarrow ACC \odot RGSW(X^{s_i})$$ — 1215

$$ACC \leftarrow KS_z(\psi_{\omega_i, \omega'_{i+1}}(ACC))$$ — 1217

$$i++$$ — 1219

$$i < N$$ — 1221

Yes / No

$$ACC \leftarrow ACC \odot RGSW(X^{-\sum_{i-0}^{N-1} s_i})$$ — 1223

$$ACC \leftarrow X^{\frac{2N}{q}\beta} \cdot ACC$$ — 1225

Start / End

## FIG. 12

<u>1300A</u>

| | |
|---|---|
| Input LWE ciphertext: | $(\beta, \vec{\alpha})$ |
| Blind rotation key: | $RGSW'(X^{s_i})$, $RGSW(X^{s_i + s_{i+1}})$, $RLWE'(z^2)$ |

# FIG. 13A

<u>1300B</u>

| | |
|---|---|
| Input LWE ciphertext: | $(\beta, \vec{\alpha})$ |
| Blind rotation key: | $RGSW'(X^{s_i})$, $RGSW(X^{-\sum_{i-0}^{N-1} s_i})$, $RLWE'(z^2)$ |

# FIG. 13B

1400

---

**Algorithm 1**

---

procedure BLINDROTATE$\left( f, (\vec{\alpha}, \beta), \left( \{RGSW_z(Y^{s_i}), RGSW_z(Y^{s_i+s_{i+1}})\}_{i\in[0,n-1]}, \{ak_{2j+1}\}_{j\in[1,q/2-1]} \right) \right)$

    $\vec{\omega} \leftarrow \vec{\alpha}$

    $acc \leftarrow (0, (f \cdot Y^\beta) \circ (X^{\omega'_0}))$                              ▷ Assume $\omega_0$ is odd

    for $(i = 0; i < n; i = i + 1)$ do

        if $\alpha_{i+1}$ is even then

            $acc \leftarrow acc \circledast RGSW_z(Y^{s_i+s_{i+1}})$         ▷ $Y^{\omega_i(s_i+s_{i+1})}$ is multiplied

            $\omega_{i+1} \leftarrow \omega_{i+1} - \omega_i$               ▷ $Y^{(\omega_{i+1}-\omega_i)s_{i+1}}$ is multiplied later

        else

            $acc \leftarrow acc \circledast RGSW_z(Y^{s_i})$

        $acc \leftarrow EvalAuto_{\omega_i\omega'_{i+1}}(acc, ak_{\omega_i\omega'_{i+1}})$

    return $acc = RLWE_z(f \cdot Y^u)$

---

# FIG. 14

1500

---

**Algorithm 2**

---

procedure BLINDROTATE$\left( f, (\vec{\alpha}, \beta), \left( \{RGSW_z(X^{s_i})\}_{i\in[0,n-1]}, RGSW_z(X^{-\Sigma_{i=0}^{n-1}s_i}), \{ak_{\frac{2N}{q}j+1}\}_{j\in[1,q-1]} \right) \right)$

    for $(i = 0; i < n; i = i + 1)$ do

        $\omega_i \leftarrow \frac{2N}{q}\alpha_i + 1$

        $\omega'_i \leftarrow \omega_i^{-1} \pmod{2N}$

    $acc \leftarrow (0, (f \cdot X^{\frac{2N}{q}\beta}) \circ (X^{\omega'_0}))$

    for $(i = 0; i < n; i = i + 1)$ do                   ▷ $RLWE_z(f \cdot X^{\frac{2N}{q}\beta + \langle \vec{\omega}, \vec{s} \rangle})$

        $acc \leftarrow acc \circledast RGSW_z(X^{s_i})$

        $acc \leftarrow EvalAuto_{\omega_i\omega'_{i+1}}(acc, ak_{\omega_i\omega'_{i+1}})$

    $acc \leftarrow acc \circledast RGSW_z(X^{-\Sigma_{i=0}^{n-1}s_i})$           ▷ $acc = RLWE_z(f \cdot X^{\frac{2N}{q}\beta + \frac{2N}{q}\langle \vec{\alpha}, \vec{s} \rangle})$

    return $acc = RLWE_z(f \cdot X^{\frac{2N}{q}u}) = RLWE_z(f \cdot Y^u)$

---

# FIG. 15

Start

1610

Receive blind rotation key for performing blind rotation operation and operand ciphertext of blind rotation operation

1630

Generate preprocessed ciphertext by performing preprocessing on operand ciphertext based on automorphism

1650

Generate operation result of homomorphic encryption by performing blind rotation operation for operand ciphertext on vector component of preprocessed ciphertext and blind rotation key

End

FIG. 16

Europäisches
Patentamt

European
Patent Office

Office européen
des brevets

# EUROPEAN SEARCH REPORT

**Application Number**

EP 23 15 3683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANDREY KIM ET AL: "General Bootstrapping Approach for RLWE-based Homomorphic Encryption", IACR, INTERNATIONAL ASSOCIATION FOR CRYPTOLOGIC RESEARCH , vol. 20210528:091203 26 May 2021 (2021-05-26), pages 1-22, XP061059400, Retrieved from the Internet: URL:https://eprint.iacr.org/2021/691.pdf [retrieved on 2021-05-26] * paragraph [0001] – paragraph [0005] * ----- | 1-15 | INV. H04L9/00 H04L9/30 |
| A | ISHIMAKI YU ET AL: "Faster Homomorphic Trace-Type Function Evaluation", IEEE ACCESS, IEEE, USA, vol. 9, 5 April 2021 (2021-04-05), pages 53061-53077, XP011848637, DOI: 10.1109/ACCESS.2021.3071264 [retrieved on 2021-04-08] * paragraph [00II] – paragraph [0III] * ----- | 1-15 | |
| A | LI RUIQI ET AL: "Homomorphic Modular Reduction and Improved Bootstrapping for BGV Scheme", 18 October 2021 (2021-10-18), 20211018, PAGE(S) 466 – 484, XP047621613, [retrieved on 2021-10-18] * paragraph [0002] – paragraph [0004] * ----- | 1-15 | |

TECHNICAL FIELDS
SEARCHED (IPC)

H04L

-/--

The present search report has been drawn up for all claims

| Place of search | Date of completion of the search | Examiner |
|---|---|---|
| Munich | 14 June 2023 | Bec, Thierry |

EPO FORM 1503 03.82 (P04C01)

# EUROPEAN SEARCH REPORT

Application Number

EP 23 15 3683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Craig Gentry ET AL: "Compressible FHE with Applications to PIR : 17th International Conference, TCC 2019, Nuremberg, Germany, December 1–5, 2019, Proceedings, Part II" In: "16th European Conference – Computer Vision – ECCV 2020", 1 January 2019 (2019-01-01), Cornell University Library,, 201 Olin Library Cornell University Ithaca, NY 14853, XP055659238, vol. 11892, pages 438-464, DOI: 10.1007/978-3-030-36033-7_17, * paragraphs [0002], [0004] * * paragraph [00A1] * ----- | 1-15 | |
| A | BRAKERSKI ZVIKA ZVIK BRK@GMAIL COM ET AL: "(Leveled) Fully Homomorphic Encryption without Bootstrapping", ACM TRANSACTIONS ON COMPUTATION THEORY (TOCT), ACM, 2 PENN PLAZA, SUITE 701 NEW YORK NY 10121-0701 USA, vol. 6, no. 3, 1 July 2014 (2014-07-01), pages 1-36, XP058495605, ISSN: 1942-3454, DOI: 10.1145/2633600 * paragraph [0006] * ----- | 1-15 | |

TECHNICAL FIELDS SEARCHED (IPC)

The present search report has been drawn up for all claims

| Place of search | Date of completion of the search | Examiner |
|---|---|---|
| Munich | 14 June 2023 | Bec, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)